# EUROPÄISCHE PATENTSCHRIFT

(11) **EP 2 640 564 B1**
(45) Veröffentlichungstag und Bekanntmachung des Hinweises auf die Patenterteilung: **18.10.2017**
(21) Anmeldenummer: 11796914.7
(22) Anmeldetag: 17.11.2011
(51) Int. Cl.: B29C 65/02, B29C 65/14, B29C 65/16, B29C 65/78, B65B 7/28

(54) **VERFAHREN UND VORRICHTUNG ZUM KONTINUIERLICHEN VERSCHWEISSEN VON KUNSTSTOFFBAUTEILEN EINES PRODUKTS**
METHOD AND DEVICE FOR THE CONTINUOUS WELDING OF PLASTIC COMPONENTS OF A PRODUCT
PROCÉDÉ ET DISPOSITIF DE SOUDAGE CONTINU DES COMPOSANTS EN MATIÈRE PLASTIQUE D'UN PRODUIT

(30) Priorität: 17.11.2010 DE 102010051452
(43) Veröffentlichungstag der Anmeldung: 25.09.2013
(73) Patentinhaber: bielomatik Leuze GmbH + Co. KG, 72639 Neuffen (DE)
(72) Erfinder: HEPP, Franz, 72555 Metzingen (DE); RÖHL, Oliver, 73278 Schlierbach (DE)
(74) Vertreter: Hoeger, Stellrecht & Partner Patentanwälte mbB
(86) Internationale Anmeldenummer: PCT/EP2011/005786
(87) Internationale Veröffentlichungsnummer: WO 2012/065742

(56) Entgegenhaltungen:
- EP-A1- 1 721 831
- US-A1- 2001 015 254

## Beschreibung

Die Erfindung betrifft ein Verfahren und eine Vorrichtung zum kontinuierlichen Verschweißen von Kunststoffbauteilen eines Produkts entlang eines am Umfang verlaufenden Fügebereichs.

Zum Verschweißen von Kunststoffbauteilen ist es bekannt, die für das Erwärmen und Aufschmelzen des Kunststoffs im Fügebereich erforderliche Schweißenergie mit einem Laser aufzubringen. Aus der EP 1 048 439-A ist ein derartiges Verfahren bekannt, bei dem im Durchschweißverfahren ein für Laserlicht durchlässiges Bauteil mit einem für Laserlicht undurchsichtigen Bauteil verschweißt wird. Dazu wird die Laserlichtquelle zum Aufschmelzen des Kunststoffs entlang des Fügebereichs bewegt, während die Bauteile feststehend eingespannt sind.

Die Anmeldung EP 1 721 831 A1 beschreibt ein Verfahren zum Verschweißen eines Deckels mit einem Behälter, wobei der Deckel und der Behälter durch einen Drehtisch transportiert werden, und wobei das Verschweißen mittels einer rotativen Eigenbewegung des Produkts erfolgen kann. Mit den bekannten Verfahren lassen sich hohe Taktzahlen mit entsprechend hohen Stückzahlen beim Verschweißen von Kunststoffteilen nicht erreichen. Die hohen Taktzahlen und Stückzahlen werden beispielsweise bei der Produktion von Endverpackungen für Lebensmittel oder Pflegemittel, oder für die Herstellung von medizinischen Massenartikeln wie Kanülen nicht erreicht. Bei der Herstellung dieser Produkte wird üblicherweise der auf einem Behälter festgeklemmte Verschluss durch Verschweißen zusätzlich gesichert.

Der Erfindung liegt daher die Aufgabe zugrunde, eine Vorrichtung und ein Verfahren zum kontinuierlichen Verschweißen von Kunststoffbauteilen bereitzustellen, das die Herstellung von Produkten mit hohen Taktzeiten und entsprechend hohen Stückzahlen ermöglicht.

Diese Aufgabe wird dadurch gelöst, dass die zu verschweißenden Kunststoffbauteile eines Produkts zunächst in ihre Fügeposition gebracht und dort fixiert werden, und anschließend das Produkt zum Verschweißen an einer feststehenden Wärmequelle vorbeitransportiert wird, wobei im Bereich der feststehenden Wärmequelle das Produkt zusätzlich zur Transportbewegung einer rotativen Eigenbewegung unterworfen wird, um die Schweißenergie in den Fügebereich einzubringen.

Nach der Erfindung weisen die Produkte einen am Umfang verlaufenden Fügebereich auf. Sie werden beim Verschweißen zweier sich überlagernden Bewegungen unterworfen, von denen eine Bewegung zum Transport des Produktes dient. Die zweite rotative Eigenbewegung ermöglicht es, die Relativbewegung zur Wärmequelle so zu gestalten, dass in dem gewünschten Maße Schweißenergie in den gesamten Fügebereich eingebracht wird.

Patentanspruch 9 enthält eine Vorrichtung, die zur Durchführung eines erfindungsgemäßen Verfahrens vorgesehen und geeignet ist.

Die Unteransprüche enthalten bevorzugte, da besonders vorteilhafte Ausgestaltungen der Erfindung.

Die zusätzliche rotative Eigenbewegung kann durch entsprechend gestaltete Transportelemente ermöglicht werden. Zum Verschweißen von Produkten mit gekrümmten Außenflächen ist es vorteilhaft möglich, die Rotationsbewegung dadurch zu erzeugen, dass beim Transport der Produkte die gekrümmte Außenfläche an einer Wand oder einem stationären oder bewegbaren Gegenhalter abrollend geführt wird. Es ist so bei einer Wand kein eigener Antrieb für die Rotationsbewegung erforderlich, wohingegen eine höhere Flexibilität gegeben ist, wenn ein Gegenhalter in eine Sollposition gefahren wird, in der dann die Behälter abrollen können und der danach wieder in eine beispielsweise Ruheposition verfahren werden kann.

Vorteilhaft werden Laserlichtquellen als Wärmequellen verwendet. Ebenso ist als Wärmequelle eine breitbandige Infrarotlichtquelle im kurz- oder mittelwelligen Infrarotbereich geeignet, insbesondere ein Glasrohr-, Keramik-, Metallfolien-, oder Carbonstrahler.

Das Laserlicht kann punktförmig oder in Form einer Linie erzeugt werden.

Bevorzugt erfolgt die Schweißung in einem Durchschweißverfahren, bei dem das äußere Bauteil durchlässig, das innere Bauteil undurchlässig für Laserlicht ist. Alternativ wäre auch eine Schweißung auf Stoß mit dem Laser möglich. Besonders vorteilhaft ist das Verfahren zur Herstellung von Produkten, bei denen ein Bauteil rotationssymmetrisch, insbesondere hohlzylinderförmig, gestaltet ist. Das Bauteil wird dann bei der zusätzlichen Rotation um die eigene Achse gedreht, beispielsweise indem es an einer Wand abrollend geführt wird. Ein im Querschnitt eckiges Bauteil kann auch verschweißt werden, wenn die Drehgeschwindigkeit der Eigendrehbewegung des Bauteils in den Ecken angepasst wird.

Anhand eines Verfahrens und einer Vorrichtung zum Verschweißen eines Verschlusses mit einem hohlzylinderförmigen Getränkebehälter näher erläutert.
- Figur 1: zeigt eine Schrägansicht der Vorrichtung.
- Figur 2: zeigt schematisch die einzelnen Arbeitsschritte,
- Figur 3: zeigt die Anordnung der Laserstrahler als Wärmequelle,
- Figur 4: zeigt schematisch die Erzeugung der Rotationsbewegung durch Abrollen an einer Wand während des Transports entlang eines Kreisabschnitts.
- Figur 5: zeigt schematisch den Transport mit einem Transportband.

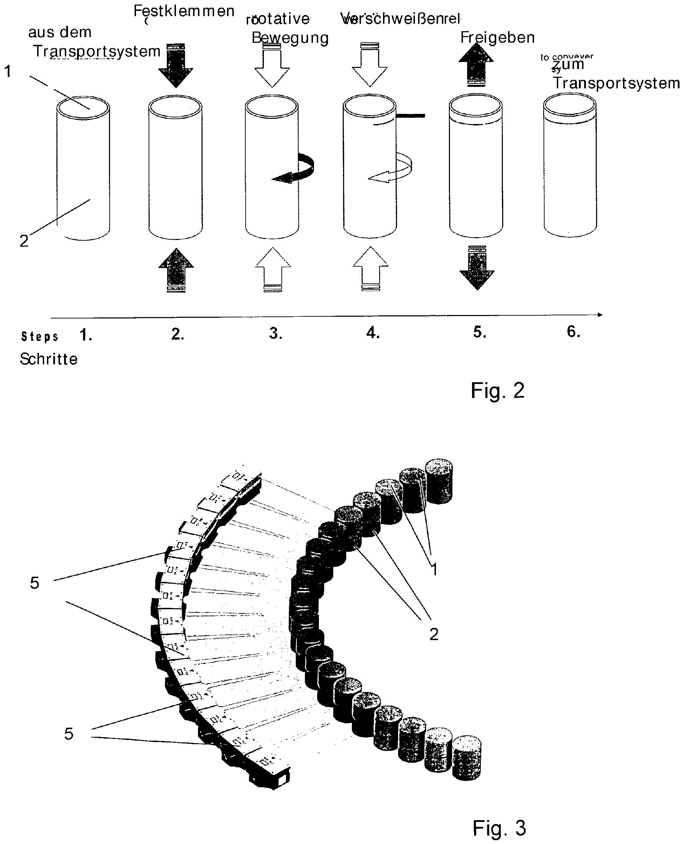

Die in den Figuren dargestellte Vorrichtung dient zum kontinuierlichen Verschweißen des Verschlusses 1 eines Flüssigkeit enthaltenden Behälters 2 mit dem Behälter 2 selbst. Die etwa kreisförmigen, einen Kragen aufweisenden Verschlüsse 1 werden dazu zunächst auf dem Flüssigkeitsbehälter 2 festgeklemmt. Dabei liegt der Kragen entweder innen, wie in Figur 2 dargestellt ist, oder ist außen übergestülpt, wie Figur 3 zeigt. Durch das Festklemmen des Verschlusses 1 an dem im Beispiel hohlzylinderförmigen und daher rotationssymmetrischen Behälter 2 sind die beiden zu verschweißenden Kunststoffbauteile (Verschluss 1, Behälter 2) in ihre Fügeposition gebracht und werden in dieser Position fixiert. Die Form des Behälters 2 muss nicht zwangsweise zylindrisch sein. Sie kann auch eine andere geometrische Form aufweisen, wobei lediglich der Bereich des Behälters 2, der mit dem Verschluss 1 versehen werden soll, rotationssymmetrisch ausgeführt sein muss.

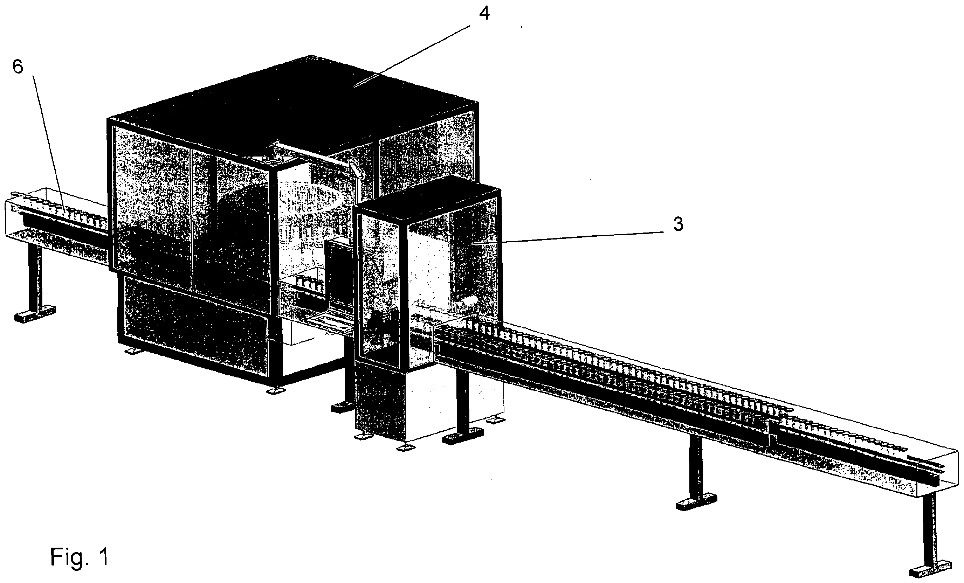

Wie in Figur 1 dargestellt, erfolgt das Verschließen des Behälters 2 und das Festklemmen des Verschlusses 1 in einer Station 3, von der die verschlossenen Behälter 2 einer Schweißstation 4 kontinuierlich hintereinander zugeführt werden. Anstelle des Festklemmens ("clamping") sind auch andere, gleichwirkende Methoden oder Mittel einsetzbar. In der Schweißstation 4 sind als Wärmequelle eine Reihe von Laserlichtstrahlern 5 entlang eines Kreisbogens angeordnet, die auf die ebenfalls entlang einer Kreisbahn transportierten Behälter 2 ausgerichtet sind. Als Laserquellen werden im Beispiel Diodenlaser verwendet, die Laserlicht mit einer Wellenlänge von 980 nm entlang einer Linie abgeben. Falls für die Anwendung ausreichend, kann das Laserlicht auch punktförmig oder in Form mehrerer Punkte auf das zu verschweißende Bauteil abgegeben werden. Bei einer punktförmigen Laserquelle kann die Laserleistung je nach Bauteilposition entsprechend der Geometrie angepasst werden. Bei mehreren punktförmigen Quellen kann die Leistung in entsprechenden Zonen eingeteilt und geregelt werden. Bei einer linienförmigen Anordnung stehen unterteilte Abschnitte zur Verfügung, in denen die Leistung jeweils entsprechend der Schweißaufgabe angepasst werden kann.

Alternativ zu einer Laserlichtquelle können auch eine oder mehrere Infrarotlichtquellen im kurz- oder mittelwelligen Infrarotbereich, beispielsweise ein Glasrohr-, Keramik-, Metallfolien- oder Carbonstrahler verwendet werden.

Zum Verschweißen der Kunststoffbauteile (hier Behälter 2 mit Verschluss 1) wird das Produkt an der feststehenden Wärmequelle 5 vorbeitransportiert. Beim Transport im Bereich der feststehenden Wärmequelle 5 wird das Produkt 1, 2 zusätzlich zur Transportbewegung einer rotativen Eigenbewegung unterworfen, wie in Figur 2 schematisch dargestellt ist. Die rotative Eigenbewegung kann dadurch bewirkt werden, dass die Schweißstation 4 eine Transporteinrichtung mit Transportelementen enthält, die eine zusätzliche rotative Bewegung ausführen können.

Bei rotationssymmetrischen Bauteilen, beispielsweise hohlzylinderförmigen Bauteilen wie im Ausführungsbeispiel, erfolgt die zusätzliche Rotation um die eigene Achse des Bauteils. Falls die Produkte entsprechend gekrümmte Außenflächen aufweisen, können sie zur Erzeugung der Rotationsbewegung an einer Wand abrollend geführt werden. Dies erspart einen eigenen Rotationsantrieb.

Die zusätzliche Rotationsbewegung ermöglicht es, über die Ausführung, die Anzahl und die Geschwindigkeit der Rotationen die zugeführte Schweißenergie in den Fügebereich einzustellen. Bevorzugt erfolgt die Schweißung im sogenannten Durchschweißverfahren, bei dem das äußere Bauteil (hier entweder der Behälter 2 nach Figur 2 oder der Verschluss 1 nach Figur 3) für Laserlicht durchlässig, das innere Bauteil für Laserlicht undurchlässig ist, so dass das Laserlicht im inneren Bauteil absorbiert wird und den Fügebereich erhitzt. Beim Verschweißen werden die Produkte kontinuierlich durch die Schweißstation 4 geführt, um hohe Taktzeiten und hohe Stückzahlen zu erreichen. Bereits vor der Schweißstation 4 werden in der Station 3 die Bauteile 1, 2 durch Spanneinheiten, die in die Transporteinheiten integriert sind, in ihre Fügeposition gebracht. Es entstehen so keine zusätzlichen Zeiten durch Einlege- oder Spannvorgänge. Die auf taktende Maschinen üblichen Verfahrzeiten für Pressen und Heizelemente entfallen ebenfalls.

Im Anschluss an die Schweißstation 4 werden die Produkte mit verschweißten Bauteilen 1, 2 von einem Förderer 6 der weiteren Verarbeitung, beispielsweise einer Packstation, zugeführt.

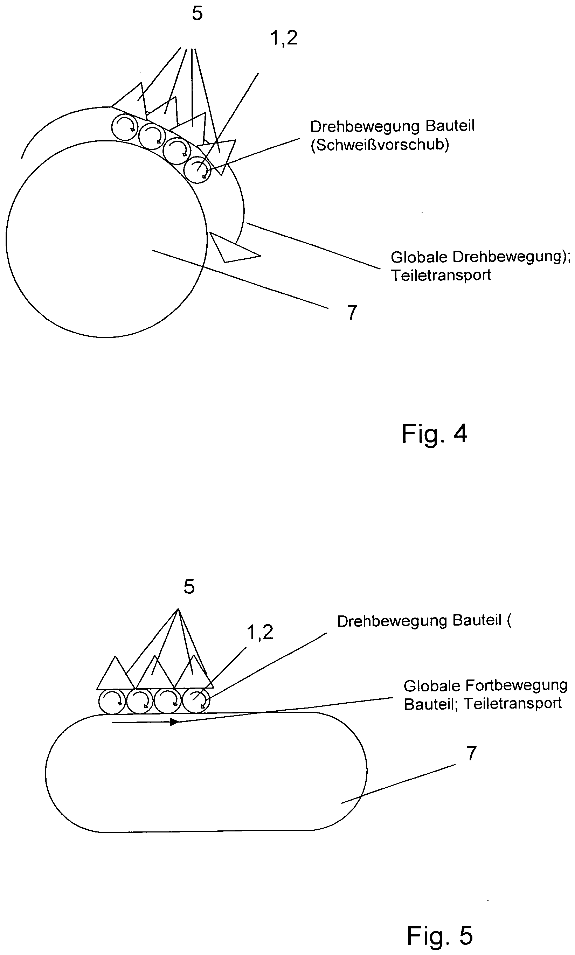

In den Figuren 4 und 5 sind zwei verschiedene Möglichkeiten dargestellt, die rotative Eigenbewegung beim Transport der Produkte (Behälter 2 mit Verschluss 1) zu erzeugen. Bei der Ausführungsform nach Figur 4 werden die Produkte 1,2 an der zur Wärmequelle 5 abgewandten Seite an einer Transporttrommel 7 anliegend gefördert und so gedreht. Die Produkte 1,2 bewegen sich so beim Verschweißen entlang eines Kreisbogens.

Beim Ausführungsbeispiel nach Figur 5 erfolgt der Transport mit einem Transportband 7 während des Verschweißens in einer im Wesentlichen geradlinigen Transportrichtung. Die zusätzliche Rotationsbewegung des Produkts 1,2 erfolgt entweder durch Abdrücken gegen eine Wand oder durch entsprechend bewegte Transportelemente.

Die Kunststoffbauteile (Behälter 2, Verschluss 1) sind jeweils aus einem verschweißbaren Kunststoff gefertigt, beispielsweise aus PE, PU, PVA, PET.

## Patentansprüche

1. Verfahren zum kontinuierlichen Verschweißen von Kunststoffbauteilen (1, 2) eines Produkts entlang eines am Umfang verlaufenden Fügebereichs, wobei die zu verschweißenden Kunststoffbauteile (1, 2) zunächst in ihre Fügeposition gebracht und dort fixiert werden und anschließend das Produkt zum Verschweißen an einer feststehenden Wärmequelle (5) vorbei transportiert wird, **dadurch gekennzeichnet, dass** im Bereich der feststehenden Wärmequelle (5) das Produkt zusätzlich zur Transportbewegung einer rotativen Eigenbewegung unterworfen wird, um die Schweißenergie in den Fügebereich einzubringen.

2. Verfahren nach Anspruch 1, **dadurch gekennzeichnet, dass** die Produkte von einer Transporteinrichtung (7) zur Wärmequelle (5) und an dieser vorbei transportiert werden, die Transportelemente enthält, die eine zusätzliche rotative Bewegung ausführen können.

3. Verfahren nach Anspruch 1, **dadurch gekennzeichnet, dass** Produkte, die entsprechend gekrümmte Außenflächen aufweisen, zur Erzeugung der Rotationsbewegung an einer Wand abrollend geführt werden.

4. Verfahren nach einem der Ansprüche 1 bis 3 **dadurch gekennzeichnet, dass** als Wärmequelle (5) eine Laserlichtquelle verwendet wird.

5. Verfahren nach einem der Ansprüche 1 bis 3, **dadurch gekennzeichnet, dass** als Wärmequelle (5) eine breitbandige Infrarotlichtquelle im kurz-oder mittelwelligen Infrarotbereich, insbesondere ein Glasrohr-, Keramik-, Metallfolien- oder Carbonstrahler verwendet wird.

6. Verfahren nach Anspruch 4, **dadurch gekennzeichnet, dass** das Laserlicht punktförmig oder in Form einer Linie erzeugt wird.

7. Verfahren nach Anspruch 4 oder 5, **dadurch gekennzeichnet, dass** die Schweißung im Durchschweißverfahren erfolgt, bei dem das äußere Bauteil (1, 2) durchlässig, das innere Bauteil (1, 2) undurchlässig für Laserlicht ist.

8. Verfahren nach einem der Ansprüche 1 bis 6, **dadurch gekennzeichnet, dass** ein Bauteil (2) rotationssymmetrisch, insbesondere hohlzylinderförmig, gestaltet ist, dass bei der zusätzlichen Rotation um die eigene Achse gedreht wird.

9. Vorrichtung zum kontinuierlichen Verschweißen von Kunststoffbauteilen (1, 2) eines Produkts entlang eines am Umfang verlaufenden Fügebereichs mit
- einer Einrichtung (3) zum Bringen der zu verschweißenden Kunststoffbauteile in ihre Fügeposition und zum Fixieren in dieser Position, und
- einer Transporteinrichtung (7) zum Transportieren des Produkts zu einer feststehenden Wärmequelle (5);
**dadurch gekennzeichnet, dass** die Vorrichtung im Bereich der feststehenden Wärmequelle (5) angeordnete Mittel aufweist, um die Produkte zusätzlich zur Transportbewegung einer rotativen Eigenbewegung zu unterwerfen.

10. Vorrichtung nach Anspruch 9, **dadurch gekennzeichnet, dass** die Transporteinrichtung (7) Transportelemente enthält, die eine zusätzliche rotative Bewegung ausführen können.

11. Vorrichtung nach Anspruch 9, **dadurch gekennzeichnet, dass** die Produkte zur Erzeugung der Rotationsbewegung an einer Wand abrollend geführt werden.

12. Vorrichtung nach einem der Ansprüche 9 bis 11, **dadurch gekennzeichnet, dass** als Wärmequelle (5) eine Laserlichtquelle verwendet wird.

13. Vorrichtung nach einem der Ansprüche 9 bis 11, **dadurch gekennzeichnet, dass** als Wärmequelle (5) eine Infrarotlichtquelle im kurz- oder mittelwelligen Infrarotbereich, beispielsweise ein Glasrohr-, Keramik-, Metallfolien- oder Carbonstrahler verwendet wird.

## Claims

1. A method of continuously welding together plastic parts (1, 2) of a product along a joint region that extends around its circumference, wherein the plastic parts (1, 2) to be welded are first moved into and secured together in a joined position, after which the product is then conveyed past a stationary heat source (5) for welding, **characterized in that** the product being rotated while being conveyed past the stationary heat source (5), thereby introducing the welding energy into the joint region.

2. The method according to claim 1, **characterized in that** the products are conveyed past the heat source (5) by a conveyor (7) that has conveying elements that can produce the product rotation.

3. The method according to claim 1, **characterized in that** products that have curved outer surfaces are guided so as to roll on these outer surfaces and thereby generate the rotation.

4. The method according to one of claims 1 through 3, **characterized in that** a laser light is used as a heat source (5).

5. The method according to one of claims 1 through 3, **characterized in that** a broadband infrared light source in either the short- or medium-wave region of the infrared is used as a heat source, in particular, glass-tube, ceramic, metal-foil, or carbon heaters.

6. The method according to claim 4, **characterized in that** the laser light is generated as a point or a line.

7. The method according to claims 4 or 5, **characterized in that** welding is effected using the through-welding process **in that** the outer part (1, 2) is transparent while the inner part (1, 2) is opaque to laser light.

8. The method according to one of claims 1 through 6, **characterized in that** one of the parts (2) is rotationally symmetrical, in particular, of cylindrically tubular shape and during the additional rotation is rotated about its own axis.

9. An apparatus for continuously welding together plastic parts (1, 2) of a product along a joint region extending around its circumference, comprising
- a device (3) for moving the plastic parts to be welded into and securing them together in their joined position, and
- a conveyor (7) for transporting the product past a stationary heat source (5),
**characterized in that** the apparatus comprises means for rotating the products in addition to the transport movement, the means being positioned in the area of the stationary heat source (5).

10. The apparatus according to claim 9, **characterized in that** the conveyor (7) comprises conveying elements that effect the rotation.

11. The apparatus according to claim 9, **characterized in that** the products are guided so as to roll along an outer surface, thereby rotating.

12. The apparatus according to one of claims 9 through 11, **characterized in that** a laser light source is used as a heat source (5).

13. The apparatus according to one of claims, **characterized in that** an infrared light source in either the short-wave or medium-wave region of the infrared is used as a heat source (5), such as, for example, glass-tube, ceramic, metal-foil, or carbon heaters.

## Revendications

1. Procédé servant à souder en continu des composants en plastique (1, 2) d'un produit le long d'une zone d'assemblage s'étendant au niveau de la périphérie,
dans lequel les composants en plastique (1, 2) à souder sont amenés dans un premier temps dans leur position d'assemblage et y sont fixés et
le produit est immédiatement après transporté aux fins du soudage le long d'une source de chaleur (5) immobile,
**caractérisé en ce que**
le produit est en supplément, aux fins du déplacement de transport, soumis à un déplacement propre rotatif dans la zone de la source de chaleur (5) immobile afin d'introduire l'énergie de soudage dans la zone d'assemblage.

2. Procédé selon la revendication 1, **caractérisé en ce que** les produits sont transportés par un dispositif de transport (7) en direction de la source de chaleur (5) et le long de cette dernière, lequel dispositif de transport contient des éléments de transport qui peuvent exécuter un déplacement rotatif supplémentaire.

3. Procédé selon la revendication 1, **caractérisé en ce que** des produits, qui présentent des surfaces extérieures incurvées de manière correspondante, sont guidés en roulant au niveau d'une paroi afin de produire le déplacement de rotation.

4. Procédé selon l'une quelconque des revendications 1 à 3, **caractérisé en ce qu'**une source de lumière laser est utilisée en tant que source de chaleur (5).

5. Procédé selon l'une quelconque des revendications 1 à 3, **caractérisé en ce qu'**une source de lumière infrarouge à large bande dans la plage infrarouge à ondes courtes ou moyennes, en particulier un émetteur de rayonnement à tube de verre, à la céramique, à films métalliques ou au carbone, est utilisée en tant que source de chaleur (5).

6. Procédé selon la revendication 4, **caractérisé en ce que** la lumière laser est produite de manière à présenter une forme de point ou sous la forme d'une ligne.

7. Procédé selon la revendication 4 ou 5, **caractérisé en ce que** le soudage est effectué lors d'un procédé de soudage bout à bout, dans lequel le composant extérieur (1, 2) laisse passer la lumière laser, le composant intérieur (1, 2) ne laisse pas passer la lumière laser.

8. Procédé selon l'une quelconque des revendications 1 à 6, **caractérisé en ce qu'**un composant (2) est configuré de manière symétrique en rotation, en particulier de manière à présenter une forme de cylindre creux, qu'il est tourné lors de la rotation supplémentaire autour de l'axe propre.

9. Dispositif servant à souder en continu des composants en plastique (1, 2) d'un produit le long d'une zone d'assemblage s'étendant au niveau de la périphérie, comprenant
- un système (3) servant à amener les composants en plastique à souder dans leur position d'assemblage et servant à les fixer dans ladite position,
et
- un système de transport (7) servant à transporter le produit en direction d'une source de chaleur (5) immobile,
**caractérisé en ce que** le dispositif présente des moyens disposés dans la zone de la source de chaleur (5) immobile afin de soumettre les produits en supplément à un déplacement propre rotatif aux fins du déplacement de transport.

10. Dispositif selon la revendication 9, **caractérisé en ce que** le système de transport (7) contient des éléments de transport, qui peuvent exécuter un déplacement rotatif supplémentaire.

11. Dispositif selon la revendication 9, **caractérisé en ce que** les produits sont amenés en roulant au niveau d'une paroi afin de produire le déplacement de rotation.

12. Dispositif selon l'une quelconque des revendications 9 à 11, **caractérisé en ce qu'**une source de lumière laser est utilisée en tant que source de chaleur (5).

13. Dispositif selon l'une quelconque des revendications 9 à 11, **caractérisé en ce qu'**une source de lumière infrarouge dans la plage infrarouge à courtes ou moyennes ondes, par exemple un émetteur à tube de verre, à la céramique, aux films métalliques ou au carbone, est utilisée en tant que source de chaleur (5).
